(19) Europäisches Patentamt
European Patent Office
Office européen des brevets

(11) EP 2 383 556 A2

(12) EUROPÄISCHE PATENTANMELDUNG

(43) Veröffentlichungstag:
02.11.2011 Patentblatt 2011/44

(51) Int Cl.:
*G01K 7/42* (2006.01)

(21) Anmeldenummer: 11003526.8

(22) Anmeldetag: 29.04.2011

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(30) Priorität: 30.04.2010 DE 102010019113

(71) Anmelder: WILO SE
44263 Dortmund (DE)

(72) Erfinder:
• Gentemann, Roland, B.
58455 Witten (DE)
• Große-Westhoff, Edgar
59269 Beckum (DE)

(74) Vertreter: Cohausz Hannig Borkowski Wißgott
Patent- und Rechtsanwaltskanzlei
Schumannstrasse 97-99
40237 Düsseldorf (DE)

(54) **Verfahren zur näherungsweisen Berechnung der operativen Temperatur eines Raumes**

(57) Die vorliegende Erfindung betrifft ein Verfahren zur näherungsweisen Berechnung der operativen Temperatur ($T_{OP}$) eines Raumes aus einer gemessenen Temperatur ($T_S$) des Raumes. Dabei wird eine Aufheiz- oder Kühlphase des Raumes in zwei oder mehr zeitliche Messabschnitte (I, II, III) unterteilt, in denen jeweils eine, insbesondere unterschiedliche, Rechenvorschrift angewendet wird, wobei in einem der Messabschnitte (I) die operative Raumtemperatur ($T_{OP}$) gemäß einer ersten Rechenvorschrift aus der Summe der gemessenen Temperatur ($T_S$) und der mit einem Faktor (K) gewichteten Steigung ($dT_S/dt$) der gemessenen Temperatur ($T_S$) berechnet wird.

Temperaturverlauf eines Aufheizvorgangs

Fig. 1

Verlauf der 1. und 2. Ableitung des Temperaturverlaufs (von Kurve 2)

Fig. 2

EP 2 383 556 A2

**Beschreibung**

Die vorliegende Erfindung betrifft ein Verfahren zur näherungsweisen Berechnung der operativen Temperatur $T_{RT}$ eines Raumes aus einer gemessenen Temperatur $T_S$ des Raumes.

Die Kenntnis der operativen Temperatur eines Raumes, welche nicht direkt gemessen werden kann, ist insbesondere bei der Regelung der Lufttemperatur dieses Raumes von Interesse, damit hiermit auf eine besonders behagliche Temperatur geregelt werden kann. Allgemein wird für Raumtemperaturregelungen eine Temperatur des Raumes gemessen, meist im Bereich einer Wand des Raumes, die als Ist-Wert der Regelung zugeführt wird. Für die Messung der Temperatur werden oft wandhängende Bediengeräte verwendet, die einen Temperaturfühler zur Messung der Temperatur aufweisen. An einem solchen Bediengerät kann meist eine Solltemperatur für den Raum vorgegeben werden, die die Regelung versucht zu erreichen und entsprechend konstant zu halten. Die Regelung gibt Steuersignale aus, die eine zentrale Einheit oder in dem Raum befindliche dezentrale Einheiten steuern.

Beispielsweise sei hier ein Zentralheizungssystem genannt, bei welchem zumindest ein Heizkörper in einem Raum angeordnet ist, der von einem Heizmedium durchflossen wird. Das Heizmedium gibt über den Heizkörper seine Wärme an den Raum ab, so dass dieser geheizt wird. Es stellt sich dabei eine Raumtemperatur in Abhängigkeit der Heizleistung ein, die vom Heizkörper geliefert wird. Eine zentrale Einheit kann dabei beispielsweise der Brenner der Zentralheizungsanlage sein, mittels dem die Vorlauftemperatur eingestellt werden kann. Auch kann eine zentrale Umwälzpumpe der Anlage verwendet werden, die auf einer vorgegebenen Kennlinie den Förderdruck der Heizungsanlage einstellt und damit die Wärmeabgabe der versorgten Heizkörper regelt, die den Raum mit Wärme versorgen. Dezentrale Einheiten sind beispielsweise Thermostatventile oder dezentrale Pumpen, die den Durchfluss an den Raum heizenden oder kühlenden Heizkörpern oder Kühleinrichtungen einstellen.

Als operative Temperatur, auch Empfindungstemperatur genannt, wird fachterminologisch und im Sinne der Erfindung das arithmetische Mittel von Strahlungstemperatur und Lufttemperatur eines Raumes verstanden, wie dies in der DIN ISO 7726 G1-G3 festgelegt ist, wenn die Luftgeschwindigkeit niedriger als 0,2 m/s und die betragliche Differenz der Strahlungstemperatur und der Lufttemperatur kleiner als 4°C ist.

Ein wandhängendes Bediengerät für eine Raumtemperaturregelung mit einem Messfühler zur Erfassung einer Temperatur des Raumes kann die operative Temperatur nicht messen, da sich der Fühler in unmittelbarer Nähe zur der den Raum begrenzenden Wand befindet, welche eine vergleichsweise hohe Wärmeaufnahmekapazität besitzt. Im Raum existiert deshalb ein Temperaturgefälle, das sich dadurch auszeichnet, dass die Temperatur in unmittelbarer Nähe zur Wand, d.h. die Temperatur innerhalb einiger Zentimeter vor der Wand, nachfolgend Wandtemperatur genannt, erheblich unterhalb der operativen Temperatur im Falle einer Heizphase bzw. oberhalb der operativen Temperatur im Falle einer Kühlphase im restlichen Teil des Raumes liegt. Aufgrund der Wärmeaufnahmekapazität der Wand ändert sich die Wandtemperatur bei einem Aufheiz- oder Kühlprozess mit einer größeren Zeitkonstante als die operative Temperatur im Raum. Bedingt durch den Verbund des Sensors mit dem Gehäuse des Bediengerätes und der Wand wird die Zeitkonstante zusätzlich vergrößert, da die operative Temperatur den Fühler nicht richtig erreicht, und das Gehäuse quasi eine isolierende Wirkung hat. Es ergibt sich dadurch ein erheblicher zeitlicher Verzug bei der Änderung der im Raumbediengerät gemessenen Temperatur gegenüber der Änderung der tatsächlichen operativen Raumtemperatur. Die Zeitkonstante des mittels des Temperatursensors des Raumbediengeräts gemessenen Temperaturverlaufs wird systembestimmend und schränkt die technischen Möglichkeiten einer Raumtemperaturregelung ein.

Denn durch die Nähe des Temperatursensors zur Wand entspricht der gemessene Temperaturwert im Wesentlichen der Wandtemperatur und nicht dem Mittel aus umgebender Strahlungstemperatur und Lufttemperatur, d.h. der operativen Temperatur (Empfindungstemperatur). Bei einem schnellen Aufheizvorgang im Raum liegt der vom Temperatursensor erfasste Wert für mehrere Stunden unterhalb der operativen Temperatur. Somit wird eine unnötig hohe Heizleistung dem Raum zugeführt, was zu einem unnötigen Primärenergieeinsatz führt. Zudem wird der empfohlene Lufttemperaturwert für ein hygienisches Raumklima, der bei ca. 22°C liegt, häufig deutlich überschritten. Es kommt zu einem erheblichen Überschwingen der Raumtemperatur über die gewünschte Zieltemperatur, was wiederum unangenehm für die im Raum befindliche Person oder Personen ist.

Um diesen Nachteil zu überwinden, ist es bekannt, ein Raumbediengerät mit großen Luftdurchlässen im Gehäuse zu verwenden, so dass die Lufttemperatur des Raumes den Temperatursensor unmittelbar erreicht. Weiterhin ist es bekannt, den Sensor in einen zylindrischen Stab einzubringen, welcher aus dem Gehäuse herausgeführt wird. Beide Lösungen können das Problem nur in begrenztem Maße lösen, da der starke Einfluss der die Wärme absorbierenden Wand nach wie vor ein erhebliches Temperaturgefälle von mehreren Grad Celsius um Raum bedingt. Weiterhin verschlechtern derartige Lösungen die ästhetischen Gestaltungsmöglichkeiten des Bediengerätes und werden aus Robustheitsgründen nicht verwendet, da sie keine ausreichende Kindersicherung oder Schutz vor Vandalismus aufweisen.

Es ist Aufgabe der vorliegenden Erfindung, die operative Temperatur eines Raumes allein aus einer gemessenen Raumtemperatur zumindest näherungsweise zu berechnen, wobei diese Temperatur für eine verbesserte Regelung der Lufttemperatur des Raumes als Ist-Temperatur der Regelung vorgegeben werden kann.

Diese Aufgabe wird durch die Merkmale des Anspruchs 1 gelöst. Vorteilhafte Weiterbildungen der Erfindung sind in den Unteransprüchen formuliert und werden nachfolgend näher erläutert.

Erfindungsgemäß wird ein Verfahren zur näherungsweisen Berechnung der operativen Temperatur $T_{OP}$ eines Raumes aus einer gemessenen Temperatur $T_S$ des Raumes vorgeschlagen, bei dem die operative Raumtemperatur $T_{OP}$ in einem Messabschnitt gemäß einer Rechenvorschrift aus der Summe der gemessenen Temperatur $T_S$ und der mit einem Faktor gewichteten Steigung $dT_S/dt$ der gemessenen Temperatur $T_S$ berechnet wird.

Der Grundgedanke der vorliegenden Erfindung besteht darin, Sensormesswerte des Temperatursensors auszuwerten und derart rechnerisch zu korrigieren, dass die Werte näher an die tatsächliche operative Temperatur herangeführt werden, die ein frei im Raum hängender Temperatursensor erfassen würde. Auf diese Weise kann bei einem Überschwingen der Temperatur, d.h. bei zu starker, dem Raum zugeführter Heizleistung, rechtzeitig eine entsprechende Gegenregelung erfolgen, so dass von der gewünschten Solltemperatur nicht zu stark abgewichen wird. Dabei erfolgt die Berechnung allein aus der Kenntnis der gemessenen Temperatur in dem Raum, ohne das zusätzliche Informationen für die Bestimmung der operativen Temperatur notwendig sind.

Erfindungsgemäß wird eine Aufheiz- oder Kühlphase des Raumes in zwei oder mehr zeitliche Messabschnitte unterteilt werden, in denen jeweils eine, insbesondere unterschiedliche, Rechenvorschrift angewendet werden. In einem der Messabschnitte, insbesondere einem ersten, am Anfang der Heiz- oder Kühlphase liegenden Messabschnitt, wird die operative Raumtemperatur $T_{OP}$ aus der Summe der gemessenen Temperatur $T_S$ und der mit einem Faktor gewichteten Steigung $dT_S/dt$ der gemessenen Temperatur $T_S$ berechnet. Dies führt in diesem Messabschnitt, in dem sich die gemessene Temperatur schnell in Richtung eines vorgegebenen Sollwerts ändert, zu sehr guten Näherungswerten der operativen Raumtemperatur.

Die Steigung $dT_S/dt$ entspricht der ersten Ableitung der gemessenen Temperatur $T_S$. Als Steigung wird allgemein die Steigung der Tangente an die Temperaturkurve $T_S(t)$ zu einem Zeitpunkt t verstanden, wobei die Steigung im Falle einer kontinuierlichen Messung gleich dem Grenzwert des Quotienten aus dem Temperaturzuwachs $\Delta T_S$ und dem entsprechenden Zuwachs der Zeit $\Delta t$ für $\Delta t$ gegen Null ($\Delta t$->0) ist:

$$\frac{dT_S(t)}{dt} = \lim_{\Delta t \to 0} \frac{T_S(t + \Delta t) - T_S(t)}{\Delta t}$$

Diese rechnerische Bestimmung der Ableitung kann mit analogen elektrischen bzw. elektronischen Mitteln erfolgen. Im Falle einer diskreten Abtastung der gemessenen Temperatur $T_S(t_n)$ zu Zeitpunkten $t_n$ kann die Steigung der gemessenen Temperatur alternativ aus dem Differenzenquotienten berechnet werden, d.h. aus dem Quotienten der Differenz der Temperatur $T_S$ zu einem Messzeitpunkt $t_2$ gegenüber der Temperatur zu dem vorherigen Messzeitpunkt $t_1$ und dem Abtastintervall:

$$\frac{dT_S(t)}{dt} = \frac{T_S(t_2) - T_S(t_1)}{t_2 - t_1}$$

Diese rechnerische Bestimmung der Steigung kann vorteilhaft mit digitalen elektrischen Mitteln, insbesondere mit einem Mikroprozessor oder einem Computer erfolgen. Es sei angemerkt, dass im Sinne der Erfindung unter der Steigung der gemessenen Temperatur $T_S$ sowohl deren Ableitung als auch deren Differenzquotient verstanden wird. Ferner ist dem Fachmann klar, dass dort, wo der Begriff Ableitung verwendet wird, im Sinne der Erfindung auch der Differenzquotient gemeint ist.

Die Addition der mit einem Faktor gewichteten Steigung zum Messsignal kompensiert den langsameren Anstieg der gemessen Temperatur, insbesondere, wenn diese im Bereich der Wand gemessen wird. Dabei kann der Faktor in einer ersten Ausführungsvariante des Verfahrens eine erste Konstante sein, die in Abhängigkeit der Wärmekapazität der Wand gewählt wird. Beispielsweise kann hier bei einer Wand mit höherer Wärmekapazität ein höherer Wert der Konstante gewählt werden und bei geringerer Wärmekapazität ein entsprechend niedrigerer Wert.

Besonders vorteilhaft ist es, als erste Konstante die Zeitkonstante des tatsächlichen Temperaturverlaufs der gemessenen Temperatur zu wählen. Als Zeitkonstante wird dabei der Zeitraum verstanden, den ein exponentiell steigender Prozess benötigt, um auf $1-e^{-1}=63{,}2\%$ anzusteigen, bzw. den ein exponentiell absinkender Prozess braucht, um auf $e^{-1}=36{,}8\%$ seines Ausgangswertes abzusinken.

Die erste Konstante kann im Bereich zwischen 0,1 h und 3 h, d.h. 6 und 180 Minuten liegen. Beispielsweise kann bei einem Gebäude mit massiven Ziegelwänden die Konstante 0,8 h, d.h. 48 Minuten betragen.

Durch diese Maßnahme wird die Zeitkonstante des Temperatursensors auf das Niveau eines frei im Raum hängenden Sensors angepasst, so dass die vom Sensor gemessene Temperatur der Empfindungstemperatur des Menschen nahe kommt. Da die Regelung dadurch ein zu starkes Überschwingen gegenregeln kann, wird primär Energie eingespart und die Lufttemperatur wird auf die Solltemperatur begrenzt, so dass ein gesünderes Raumklima hergestellt wird.

Alternativ zu einer Konstanten, kann der Faktor in Abhängigkeit der Steigung der gemessenen Temperatur $T_S$ gewählt werden, d.h. eine von der Steigung $dT_S/dt$ der gemessenen Temperatur $T_S$ abhängige Funktion sein. Dies ermöglicht, die gemessene Temperatur rechnerisch noch besser an die operative Temperatur heranzuführen. Dabei kann der Faktor im Bereich einer kleineren Steigung größer gewählt werden, als im Bereich einer größeren Steigung. In einem besonders vorteilhaften und einfachen Fall kann der Faktor unterhalb einer bestimmten Steigung $dT_S/dt$, d.h. bei Unterschreiten eines vorgegebenen Steigungsgrenzwerts, ein erster konstanter Wert sein, beispielsweise zwischen 1,5h und 3h liegen, und oberhalb der bestimmten Steigung $dT_S/dt$, d.h. bei Überschreiten des vorgegebenen Steigungsgrenzwerts einem zweiten Wert entsprechen, der größer als der erste Wert gewählt ist, beispielsweise zwischen 0h und 1,5h liegt.

Weiterhin ist es von Vorteil, wenn oberhalb des vorgegebenen Steigungsgrenzwerts ein konstanter Temperaturwert zu der mit dem Faktor gewichteten Steigung hinzuaddiert wird. Dies bewirkt eine Parallelverschiebung der gemessenen Temperatur um den konstanten Temperaturwert, wodurch die Abweichung des Verlaufs der gemessenen Temperatur gegenüber dem Verlauf der operativen Temperatur bei schnellem Anstieg der gemessenen Temperatur verringert wird.

Die beschriebene Verfahrensweise bezieht sich auf die Steigung der gemessenen Temperatur bei einem Aufheizvorgang, d.h. auf eine positive Steigung. In entsprechender Weise kann der Faktor im Falle einer Kühlphase, d.h. bezogen auf eine negative Steigung der gemessenen Temperatur gewählt werden. In einem besonders vorteilhaften und einfachen Fall bei einer Kühlphase kann der Faktor oberhalb einer bestimmten negativen Steigung $dT_S/dt$, d.h. bei Überschreiten eines vorgegebenen negativen Steigungsgrenzwerts, ein erster konstanter Wert sein, beispielsweise zwischen 1,5h und 3h liegen, und unterhalb der bestimmten negativen Steigung $dT_S/dt$, d.h. bei Unterschreiten des vorgegebenen negativen Steigungsgrenzwerts einem zweiten Wert entsprechen, der größer als der erste Wert gewählt ist, beispielsweise zwischen 0h und 1,5h liegt. Ferner kann unterhalb des vorgegebenen negativen Steigungsgrenzwerts ein konstanter Temperaturwert von der mit dem Faktor gewichteten Steigung subtrahiert werden.

Die Berechnung der operativen Temperatur aus der Summe der gemessenen Temperatur und der mit der Konstante gewichteten Steigung der gemessenen Temperatur wird vorzugsweise zu Beginn einer Aufheiz- oder Kühlphase, d.h. in einem ersten Messabschnitt I vorgenommen. Dabei kann der erste Messabschnitt I dadurch definiert sein, dass die Steigung $dT_S/dt$ der gemessenen Temperatur $T_S$ positiv ist und die Änderung der Steigung $d^2T_S/dt^2$ einen vorgegebenen ersten Grenzwert (b) überschreitet. Anhand der ersten und zweiten Ableitung der gemessenen Temperatur, d.h. ihrer Steigung und deren Änderung, sowie gegebenenfalls unter Berücksichtigung der Zeitkonstanten des Verlaufs der gemessenen Temperatur, kann rechnerisch auf die zu diesem Zeitpunkt bestehende operative Temperatur in guter Näherung geschlossen werden. Durch geeignete Wahl der Parameter, d.h. des Faktors, des konstanten Temperaturwerts und des ersten Grenzwertes, kann das erfindungsgemäße Verfahren an die Bauweise des Gebäudes angepasst werden. Dabei ist sowohl eine Verwendung des Verfahrens bei Heizvorgängen als auch bei Kühlvorgängen, d.h. bei Verwendung einer Raumklimatisierung möglich.

Um die gemessene Temperatur nach dem Beginn der Aufheiz- oder Kühlphase in einem zweiten Messabschnitt II an die operative Temperatur anzupassen, kann die operative Temperatur aus der Summe der gemessenen Temperatur $T_S$ und einer zweiten Konstanten berechnet werden. Der zweite Messabschnitt II kann dabei dadurch definiert sein, dass die Änderung der Steigung $d^2T_S/dt^2$, d.h. die zweite Ableitung der gemessenen Temperatur $T_S$ unter den ersten Grenzwert (b) fällt und die Steigung $dT_S/dt$, d.h. die erste Ableitung oberhalb eines zweiten Grenzwertes (a) liegt bzw. bleibt.

Die Grenzwerte können an die Eigenschaften der Wand des Raumes angepasst sein. Dabei kann der erste Grenzwert im Wertebereich zwischen $0°C/h^2$ und $2°C/h^2$ und der zweite Grenzwert im Wertebereich zwischen $0°C/h$ und $3°C/h$ liegen.

Der zweite Messabschnitt II zeichnet sich durch eine geringere Steigung der gemessenen Temperatur aus, so dass die erste Ableitung der gemessenen Temperatur in dem Übergang des ersten Messabschnitts I zum zweiten Messabschnitt II ein Maximum aufweist und die zweite Ableitung entsprechend einen Nulldurchgang besitzt. So kennzeichnet beispielsweise ein Absinken der zweiten Ableitung unter den ersten Grenzwert, der beispielsweise bei $0,2°C/h^2$ liegen kann, vorzugsweise aber negativ gewählt wird, bei gleichzeitigem Vorliegen einer noch immer hohen Steigung von beispielsweise mehr als $1°C/h$ einen Betrieb, bei dem noch immer eine starke Aufheizung folgt, dies jedoch mit reduzierter Leistung gegenüber dem ersten Messabschnitt I.

Die Addition der zweiten Konstanten zu dem gemessenen Wert bewirkt, dass sich die berechnete operative Temperatur parallel zur gemessenen Temperatur bewegt.

Als zweite Konstante kann beispielsweise der letzte Wert, der Mittelwert oder der Maximalwert der ersten Ableitung der gemessenen Temperatur in dem ersten Messabschnitt I verwendet werden, wobei der gewählte Wert durch einen Faktor K gewichtet ist. Vorzugsweise wird dieser Faktor entsprechend dem Faktor gebildet, wie er in der Berechnungsvorschrift gemäß Messabschnitt 1 verwendet ist.

In einem dritten Messabschnitt III kann die Raumtemperatur gleich der gemessenen Temperatur gesetzt werden. Der dritte Messabschnitt III kann dadurch definiert sein, dass die Steigung $dT_S/dt$ der gemessenen Temperatur $T_S$ negativ wird, oder die Steigung $dT_S/dt$ zwischen Null und dem zweiten Grenzwert (a) und die Änderung der Steigung $d^2T_S/dt^2$ der gemessenen Temperatur $T_S$ unterhalb des ersten Grenzwerts (b) liegt. Der zweite Messabschnitt ist dabei dadurch gekennzeichnet, dass eine Raumtemperaturregelung versucht, die Solltemperatur zu halten, d.h. dem Raum keine wesentliche Heizleistung zuzuführen oder Wärmeenergie zu entnehmen. Dies ist gerade der Fall, wenn die gemessene Temperatur abfällt, d.h. die erste Ableitung der gemessenen Temperatur negativ wird oder im weiteren Regelungsprozess nur geringe Änderungen der gemessenen Temperatur und geringe Änderungen der Steigung der gemessenen Temperatur vorliegen.

In einer vorteilhaften Weiterbildung des erfindungsgemäßen Verfahrens kann der aktuelle Wert der berechneten operativen Temperatur korrigiert werd, wenn sich die berechnete Raumtemperatur schneller als eine vorgegebene Maximaländerung pro Messintervall ändert. Die Korrektur gewährleistet einen stetigen Übergang von einem Messabschnitt zum nächsten Messabschnitt und begrenzt die Änderungsgeschwindigkeit der ermittelten operativen Temperatur, da sich diese nur so schnell ändern darf, wie die eigentliche Messkurve, die ihrer Berechnung zu Grunde liegt. Weiterhin sorgt die Korrektur in dem dritten Messabschnitt dafür, dass die berechnete Raumtemperaturkurve stetig auf bzw. zur Messkurve zurückkehrt. Hierzu kann von dem zuletzt berechneten Wert der operativen Temperatur im Falle einer Aufheizphase ein vorgegebener maximaler Temperaturänderungswert abgezogen und im Falle einer Kühlphase hinzuaddiert werden.

Als maximaler Temperaturänderungswert kann beispielsweise eine Maximaländerung von 2,5°C/h verwendet werden. Je höher diese statische Grenze gewählt wird, desto schneller kehrt die berechnete Raumtemperaturkurve wieder zur Messkurve zurück.

In einer alternativen Ausführungsvariante kann dieser maximale Temperaturänderungswert durch den Betrag des mit dem Abtastintervall multiplizierten aktuellen Steigungswerts der gemessenen Temperatur ersetzt sein. Damit wird eine dynamische, verbesserte Annäherung an den tatsächlichen Raumtemperaturverlauf im dritten Messabschnitt erreicht.

Vorzugsweise kann die Korrektur der berechneten operativen Temperatur dann vorgenommen werden, wenn die Steigung der berechneten Temperatur negativ ist im Falle eines Heizprozesses bzw. positiv ist im Falle eines Kühlprozesses.

Die Temperatur des Raumes kann zu diskreten Zeitpunkten gemessen werden, wobei die Abtastintervalle zwischen 0,5 Minuten und 5 Minuten liegen können, vorzugsweise 1 Minute betragen. Weiterhin kann für die Berechnung der Steigung und ihrer Änderung, d.h. für die Berechnung der ersten und zweiten Ableitung der gemessenen Temperatur respektive für die Berechnung entsprechender Differenzenquotienten aus den Messwerten eine gleitende Mittelwertbildung oder lineare Regression der Messwerte durchgeführt werden. So kann beispielsweise bei einer gegebenen Menge von fünf oder zehn der letzten Messwerte eine arithmetische Mittelwertbildung vorgenommen werden, um Messrauschen zu unterdrücken.

Aus dem beschriebenen Zusammenhang wurde bereits deutlich, dass die genannten drei Messabschnitte I, II, III unmittelbar aneinandergrenzen. Dabei folgt der zweite Messabschnitt II unmittelbar dem ersten Messabschnitt I und der dritte Messabschnitt III unmittelbar dem zweiten Messabschnitt II.

Die zu messende Temperatur kann mittels eines Temperaturfühlers im Bereich einer Wand des Raumes gemessen werden. Insbesondere kann der Temperaturfühler Teil eines wandhängenden Raumbediengerätes einer Raumtemperaturregelung sein, d.h. eines Bediengerätes, das an einer den Raum begrenzenden Wand montiert ist und an dem wenigstens eine Eingabe, beispielsweise eine Sollwertvorgabe für die Raumtemperatur möglich ist.

Schließlich ist das erfindungsgemäße Verfahren bevorzugt für die Anwendung innerhalb einer Raumtemperaturregelung des Raumes geeignet, wobei die berechnete operative Raumtemperatur als Istwert für die Raumtemperaturregelung des Raumes verwendet wird.

Weitere Merkmale und Vorteile der Erfindung werden anhand des nachfolgenden Ausführungsbeispieles und der beigefügten Figuren erläutert. Dabei zeigen:

Figur 1:    grafische Gegenüberstellung der Temperaturverläufe von gemessener Temperatur, Raumtemperatur, berechneter Temperatur und Solltemperatur.

Figur 2:    Darstellung des Kurvenverlaufs der ersten und zweiten Ableitung der gemessenen Temperatur

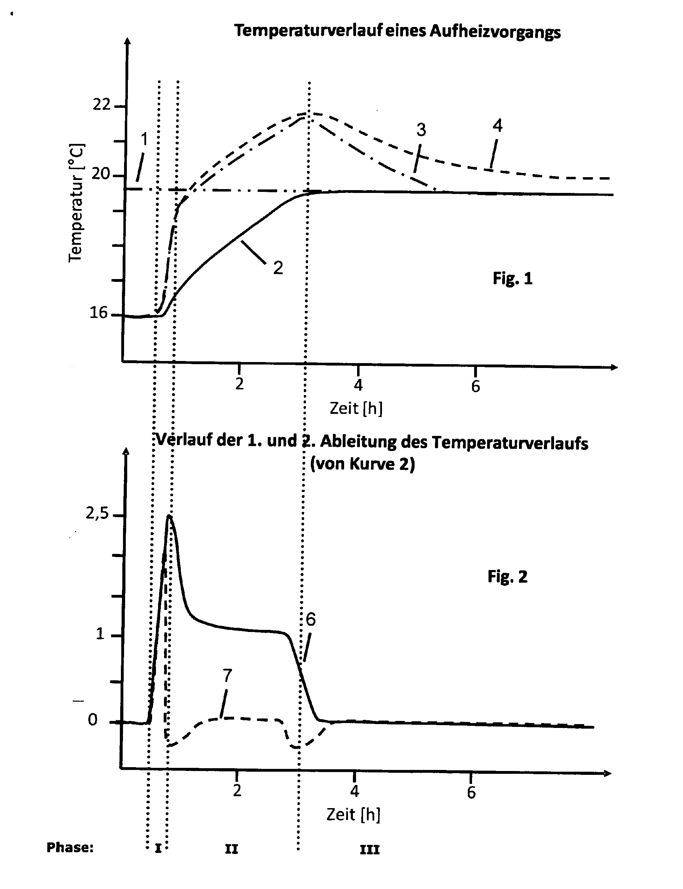

Figur 1 zeigt eine Gegenüberstellung verschiedener Temperaturverläufe bei einem Aufheizvorgang eines Raumes über mehrere Stunden. Dargestellt ist ein Solltemperaturverlauf 1 einer vorgegebenen Solltemperatur $T_{soll}$, eine

Messkurve 2 einer gemessenen Temperatur $T_S$ an bzw. in einem Bediengerät für eine Raumtemperaturregelung, welches an einer Wand des Raumes angeordnet ist, der Verlauf 3 der erfindungsgemäß näherungsweise berechneten operativen Temperatur $T_{OP}$ und der Raumtemperaturverlauf 4 der tatsächlichen operativen Temperatur $T_{RT}$ im Raum, nachfolgend auch Raumtemperatur $T_{RT}$ genannt. Die Temperaturverläufe sind in drei Messabschnitte I, II, III unterteilt, nachfolgend auch Phasen genannt.

Die Kurve der Solltemperatur 1 ist eine Gerade bei ca. 19,7 °C, wobei der Aufheizvorgang mit einem Sollwertsprung von 16°C auf 19,7°C beginnt und die Solltemperatur über mehrere Stunden gehalten wird. In Folge des Sprungs der Solltemperatur 1 beginnt der Aufheizprozess im Raum und die Raumtemperaturkurve 4 steigt in einem ersten Messabschnitt I steil an, bis sie die vorgegebene Solltemperatur erreicht. Die Raumtemperaturkurve 4 überschreitet dann in einem als zweiten Messabschnitt II bezeichneten Abschnitt den Temperatursollwert, knickt ab und steigt nur noch mit verminderter Steigung bis auf einen Wert von ca. 21,9°C. In diesem zweiten Messabschnitt II wird der Raum mit verminderter Leistung beheizt. Anschließend fällt die Raumtemperaturkurve 4 ab und bewegt sich in einem als dritten Messabschnitt III bezeichneten Abschnitt langsam in Richtung der Solltemperaturkurve 1. In diesem Messabschnitt III verfolgt die Raumtemperaturregelung das Ziel, die eingestellte Solltemperatur zu halten.

Im Vergleich zur Raumtemperatur $T_{RT}$ steigt die am Bediengerät gemessene Temperatur $T_S$ in der ersten und zweiten Phase I, II langsamer an und verbleibt selbst in der dritten Phase III über mehrere Stunden deutlich unterhalb der tatsächlichen Raumtemperatur $T_{RT}$, vergleiche Kurven für $T_S$ und 4 für $T_{RT}$. Die Differenz beträgt im zweiten Messabschnitt II zwischen 1°C und 2°C.

Figur 2 zeigt den Verlauf 6 der Steigung $dT_S/dt$ der gemessenen Temperatur $T_S$, d.h. die erste Ableitung der Messkurve 2, und den Verlauf 7 der Änderung $d^2 T_S/dt^2$ der Steigung, d.h. die zweite Ableitung der gemessenen Temperatur $T_S$ (Kurve 2 in Figur 1). Dabei ist ersichtlich, dass im ersten Messabschnitt I der Kurven 6, 7 die Steigung $dT_S/dt$ der gemessenen Temperatur $T_S$ stetig bis auf einen Maximalwert von ca. 2,5°C/ h steigt. Anschließend wird die Steigung $dT_S/dt$ allmählich geringer, verbleibt jedoch oberhalb von 1°C/h. Die maximale Steigung kennzeichnet den Übergang von dem ersten Messabschnitt I zu dem zweiten Messabschnitt II. In diesem Übergangspunkt weist der Verlauf 7 der zweiten Ableitung einen Nulldurchgang auf, da die Steigung der Steigung, d.h. die Änderung der ersten Ableitung von positiven Werten zu negativen Werten wechselt. Am Ende des zweiten Bereichs II sinkt die Steigung 6 der gemessenen Temperatur $T_S$ rapide ab und fällt auf unter 1°C/h. Dies kennzeichnet den Beginn des dritten Messabschnitts III, in welchem die gemessene Temperatur 4 lediglich geringe Steigungen von deutlich unterhalb 1°C/h besitzt. Den dargestellten drei Messabschnitten I, II, III werden drei Phasen zugeordnet, in denen die operative Temperatur $T_{OP}$ mathematisch auf unterschiedliche Art näherungsweise berechnet werden kann. Wird die berechnete operative Temperatur $T_{OP}$ einer Raumtemperaturregelung als Istwert vorgegeben, können die Messabschnitte auch als Regelungsphasen betrachtet werden. Die unterschiedlichen Berechnungsvorschriften werden nachfolgend anhand von Gleichungen erläutert.

In der ersten Phase I startet der Aufheizvorgang mit voller Leistung. Die Kurve 4 der Raumtemperatur $T_{RT}$ steigt schnell an, vor allem bei Radiatorheizungen, wie sie in diesem Ausführungsbeispiel zur Beheizung des Raumes verwendet sind. Die Messkurve 2 eines Temperaturfühlers des Raumbediengerätes ($T_S$) folgt der tatsächlichen Raumtemperatur $T_{RT}$ langsam, da der Temperaturfühler in Wandnähe positioniert ist und somit zum Großteil die Wandtemperatur erfasst. Grundsätzlich hat das Messsignal 2 des Raumbediengerätes eine Tiefpasscharakteristik, die durch die folgende Differenzialgleichung eines Tiefpass beschrieben werden kann:

$$\frac{dT_S}{dt} = -\frac{1}{T}(T_S - T_{RT})$$

Dabei stellt $T_{RT}$ die vorherrschende operative Temperatur 4, d.h. die tatsächliche Raumtemperatur und $T_S$ die gemessene Temperatur 2 am Raumbediengerät dar. Weiterhin ist T die Zeitkonstante des gemessenen Temperaturverlaufs 2 im Bereich der Wand bezeichnet. Durch Umstellen der Gleichung wird folgender Zusammenhang erhalten:

$$T_{RT} = T_S + T \cdot \frac{dT_S}{dt}$$

Somit lässt sich das Tiefpassverhalten der Raumbediengerät-Temperatursensorik effektiv kompensieren, indem zu dem eigentlichen Messwert $T_S$ ein Term bestehend aus Zeitkonstante T und erster Ableitung $dT_S$ /dt des Messwerts $T_S$ hinzuaddiert wird.

Aus dieser Erkenntnis heraus wird erfindungsgemäß zu Beginn der Aufheizphase, Messabschnitt I, die zu berechnende operative Temperatur $T_{OP}$ aus der Summe der gemessenen Temperatur $T_S$ und der mit einem Faktor K gewichteten Steigung der gemessenen Temperatur $T_S$ näherungsweise berechnet:

$$T_{OP} = T_S + K \cdot \frac{dT_S}{dt}$$

Der Faktor K kann in einer Ausführungsvariante eine Konstante, insbesondere die Zeitkonstante T des gemessenen Temperaturverlaufs 2 an der Wand sein. Alternativ kann ein von der Steigung der gemessenen Temperatur $T_S$ abhängiger Wert als Faktor K verwendet werden, um die Steigung zu gewichten. Dabei kann der Faktor K im Bereich einer kleineren Steigung größer gewählt werden, als im Bereich einer größeren Steigung. Als Steigungsgrenzwert kann beispielsweise 0,4°C/h verwendet werden, wobei der Faktor K unterhalb des Steigungsgrenzwerts von 0,4°C/h der Faktor beispielsweise einen Wert von 2,5h und oberhalb des Steigungsgrenzwerts beispielsweise den Wert 0,5h besitzen kann. Erfindungsgemäß können jedoch auch andere Steigungsgrenzwerte und andere Werte für den Faktor K verwendet werden. Auch ist eine lineare Abhängigkeit des Faktors K von der Steigung der gemessenen Temperatur $T_S$ möglich.

Weiterhin ist es von Vorteil, wenn in Folge der geringeren Gewichtung der Steigung $dT_S$ /dt in der obigen Berechnungsformel oberhalb des vorgegebenen Steigungsgrenzwerts ein konstanter Temperaturwert zu der mit dem Faktor gewichteten Steigung hinzuaddiert wird, so dass eine Parallelverschiebung der gemessenen Temperatur um den konstanten Temperaturwert erfolgt. Der konstante Temperaturwert kann der Änderung des Faktors in Angaben vom Hundert bezogen auf 1 °C entsprechen. Unter Verwendung der zuvor genannten numerischen Werte, nach denen der Faktor K unterhalb des Steigungsgrenzwerts den Wert 2,5 h und oberhalb desselben den Wert 0,5 besitzt, wurde der Faktor um 80% reduziert. Die Addition eines konstanten Temperaturwerts von 0,8°C ist daher günstig.

Gemäß der beispielhaft genannten numerischen Werte kann in dem ersten Messabschnitt I die operative Temperatur $T_{OP}$ wie folgt in guter Näherung berechnet werden:

$$T_{OP} = T_S + 2{,}5h \cdot \frac{dT_S}{dt}, f\ddot{u}r \ \frac{dT_S}{dt} < 0{,}4°C/h$$

$$T_{OP} = T_S + 0{,}5h \cdot \frac{dT_S}{dt} + 0{,}8°C, f\ddot{u}r \ \frac{dT_S}{dt} \geq 0{,}4°C/h$$

Die Anwendung dieser Gleichung ist besonders in dem ersten Messabschnitt I zielführend, da der Verlauf 6 der ersten Ableitung $dT_S$ /dt in diesem Messabschnitt höhere Werte erreicht als in den übrigen Messabschnitten II und III.

Da die erste Ableitung 6 ($dT_S$ /dt) nach dem ersten Messabschnitt I schnell abfällt, die Raumtemperatur $T_{RT}$ (Kurve 4) jedoch weiterhin steigt, wird in dem zweiten Messabschnitt II die Berechnungsmethode für die Annäherung der zu berechnenden operativen Temperatur $T_{OP}$ and die tatsächliche Raumtemperatur $T_{RT}$ abgeändert. Auch folgt für den dritten Messabschnitt die näherungsweise Berechnung der operativen Temperatur $T_{OP}$ auf anderem Wege, wie nachfolgend erläutert wird.

Die drei Messabschnitte I, II, III können durch Grenzwerte definiert werden, oberhalb, unterhalb oder innerhalb derer die Werte der ersten Ableitung 6 oder zweiten Ableitung 7 der gemessenen Temperatur $T_S$ jeweils liegen. Als Grenzwerte werden zwei Parameter a und b festgelegt. Dabei stellt der Parameter a einen Grenzwert für die erste Ableitung 6, der Parameter b einen Grenzwert für die zweite Ableitung 7 der gemessenen Temperatur $T_S$ dar. Der erste Grenzwert a kann in Abhängigkeit der Gebäudeart im Bereich zwischen 0°C/h und 3°C/h liegen. Der Grenzwert b kann demgegenüber im Wertebereich zwischen 0°C/h$^2$ bis 2°C/h$^2$ liegen.

In dem Ausführungsbeispiel wird davon ausgegangen, dass der zu beheizende Raum in einem Altbau-Gebäude mit massiven Ziegelwänden liegt. Es wird als Faktor eine Zeitkonstante T von 0,8h verwendet. Die nachfolgenden beispielhaften numerischen Werte könne jedoch auch bei einem von der Steigung der gemessenen Temperatur abhängigen Faktor, wie zuvor beschrieben, verwendet werden. Weiterhin werden für eine derartige Wand die folgenden Parameterwerte für die Grenzwerte a und b und die folgenden Bedingungen für die einzelnen Phasen verwendet:

| Messabschnitt | Parameter | | Bedingung | |
|---|---|---|---|---|
| | a [°C/h] | b [°C/h²] | $dT_S/dt$ | $d^2T_S/dt^2$ |
| Phase I | 0 | 0,2 | > 0 | ≥ 0,2 |
| Phase II | 1 | 0,2 | > 1 | ≤ 0,2 |
| Phase III | 0 oder 1 | 0 oder 0,2 | ≤ 0 oder 0<$dT_S$/dt≤1 | < 0 oder < 0,2 |

In dem ersten Messabschnitt I wird wie bereits beschrieben, die operative Temperatur $T_{OP}$ aus der Summe der gemessenen Temperatur $T_S$ und ihrer mit einem Faktor K gewichteten Steigung $dT_S$ /dt sowie gegebenenfalls einer additiven Temperaturkonstanten näherungsweise berechnet. Diese Berechnungsweise kann dann erfolgen, wenn die gemessene Temperatur $T_S$ steil steigt, d.h. die erste Ableitung 6 der gemessenen Temperatur deutlich positiv (>0) ist, insbesondere mehr a = 1 °C/h beträgt, und die zweite Ableitung 7 oberhalb eines Grenzwertes b von beispielsweise b=0,2°C/h² liegt, siehe Figur 2.

In dem zweiten Messabschnitt II wird mit dem letzten Steigungswert *P_I_Ende* aus dem ersten Messabschnitt I statisch weitergerechnet, da die Steigung des Messsignals in dem zweiten Messabschnitt II zu gering ist, als dass die Weiteranwendung der ersten Berechnungsweise eine gute Annäherung an die tatsächliche Raumtemperatur 4 bringen würde. Bei der Berechnungsweise aus Phase I wird die Steigung der gemessenen Temperatur durch den letzten Steigungswert *P_I_Ende* ersetzt und die Berechnungsformel mit diesem konstanten Wert *P_I_Ende* verwendet. Der Steigungswert wird auch hier durch den zuvor beschrieben Faktor K gewichtet, wobei auch der Faktor im Falle seiner Steigungsabhängigkeit nach dem letzten Wert der Steigung bestimmt wird. Die zu bestimmende operative Temperatur $T_{OP}$ wird dann näherungsweise gemäß der folgenden Gleichung berechnet:

$$T_{OP} = T_S + P\_I\_Ende \cdot K$$

Alternativ kann auch der maximale oder der mittlere Wert der Ableitung 6 aus dem ersten Messabschnitt I als Steigungswert verwendet werden. Der zweite Messabschnitt II ist dadurch definiert, dass die Änderung der Steigung $d^2T_S$ /dt² der gemessen Temperatur $T_S$ unter den Grenzwert b=0,2°C/h² fällt und die Steigung $dT_S$ /dt der gemessen Temperatur $T_S$ noch immer über dem Grenzwerts a=1°C/h liegt.

In dem dritten Messabschnitt III sind die Bereiche, in denen nicht geheizt wird, mit den Bereichen zusammengefasst, in denen zur Aufrechterhaltung der Raumtemperatur $T_{RT}$ nur wenig Heizenergie in den Raum eingebracht wird. Für diesen dritten Bereich III reicht die Messsignalinformation allein nicht aus, um eine geeignete Korrektur des gemessenen Temperaturwertes $T_S$ durchzuführen. Aus diesem Grund wird die zu berechnende operative Temperatur $T_{OP}$ in diesem dritten Messabschnitt III gleich der gemessenen Temperatur $T_S$ gesetzt. Es sei angemerkt, dass unter der erfindungsgemäßen "Berechnung" der operativen Temperatur $T_{OP}$ auch dieses Gleichsetzen verstanden wird.

Mit Hilfe der Kenntnis über die eingebrachte Leistung in den Raum, d.h. beispielsweise der Drehzahl einer dezentralen Pumpe am Heizkörper und vorzugsweise auch dessen Vorlauftemperatur kann im dritten Bereich III ebenfalls eine Korrektur durchgeführt werden. Dies ist jedoch nicht zwingend nötig und ohne Kenntnis der in den Raum eingebrachten Leistung auch nicht möglich.

Um einen stetigen Übergang der näherungsweise berechneten operativen Temperatur $T_{OP}$ von einem Messabschnitt zum anderen Messabschnitt zu erreichen, insbesondere vom zweiten zum dritten Messabschnitt, wird eine Korrektur der berechneten Temperatur $T_{OP}$ bei fallenden Werten von $T_{OP}$ vorgenommen, d.h. wenn der neue Wert der ermittelten operativen Raumtemperatur $T_{OP}$ kleiner als der vorherige Messwert $T_{OP\_alt}$, d.h. der Messwert für das letzte Abtastintervall ist. In diesem Fall wird eine Begrenzung der Steigung eingeführt.

$$wenn \ \frac{dT_{OP}}{dt} < 0$$

$$dann \ T_{OP} = T_{OP\_alt} - \left|\frac{dT_S}{dt}\right| \cdot dt$$

Die Begrenzung der Steigung wird dadurch erreicht, dass von diesem zuletzt berechneten Wert $T_{OP\_alt}$ der Betrag der Steigung des aktuellen Messwertes der gemessenen Temperatur $T_S$, multipliziert mit der Länge des Abtastintervalls, subtrahiert wird. Die Verwendung des Betrags bewirkt, dass auch bei steigender Temperatur $T_S$ im Raumbediengerät eine Annäherung der Kurve der berechneten operativen Temperatur $T_{OP}$ an die gemessene Temperatur $T_S$, Kurve 2, erfolgt. Denn die berechnete operative Temperatur $T_{OP}$ darf sich nur so schnell ändern, wie die eigentliche Messkurve 2 des Raumbediengeräts.

Eine einfachere Variante ist die Begrenzung der Steigung der berechneten operativen Temperatur $T_{OP}$ auf einen konstanten Wert, wie bei steigenden Temperaturen. Zu Beginn des dritten Messabschnitts würde sich dann die berechnete Kurve 3 schneller wieder der Messkurve 2 annähern. Bei steigenden Temperaturen gilt die statische Obergrenze von 2,5°C/h für die erste Ableitung, um Fehler auszuschließen.

Weiterhin kann für jeden der drei Messabschnitte vorgesehen sein, dass die Korrektur nur angewendet wird, wenn der zu berechnende Wert der operativen Raumtemperatur $T_{OP}$ größer als der eigentliche Messwert $T_S$ ist, wobei diese Maßnahme nur für Räume ohne Klimatisierung gilt.

Für Räume mit Klimatisierung ergibt sich grundsätzlich die gleiche Problematik wie bei beheizten Räumen mit dem Unterscheid, dass auch bei fallenden Temperaturen eine Korrektur erfolgen kann, um auf die richtige Lufttemperatur regeln zu können. Die Messabschnitte I und II können unverändert verwendet werden. Nur werden zusätzliche Grenzen festgelegt für eine Abkühlung. Der dritte Messabschnitt III enthält dann nur noch den Fall, dass geringe Steigungen vorhanden sind, für die keine Korrektur durchgeführt wird.


**Patentansprüche**

1.  Verfahren zur näherungsweisen Berechnung der operativen Temperatur ($T_{OP}$) eines Raumes aus einer gemessenen Temperatur ($T_S$) des Raumes, **dadurch gekennzeichnet, dass** eine Aufheiz- oder Kühlphase des Raumes in zwei oder mehr zeitliche Messabschnitte (I, II, III) unterteilt wird, in denen jeweils eine, insbesondere unterschiedliche, Rechenvorschrift angewendet wird, wobei in einem der Messabschnitte (I) die operative Raumtemperatur ($T_{OP}$) gemäß einer ersten Rechenvorschrift aus der Summe der gemessenen Temperatur ($T_S$) und der mit einem Faktor (K) gewichteten Steigung ($dT_S/dt$) der gemessenen Temperatur ($T_S$) berechnet wird.

2.  Verfahren nach Anspruch 1, **dadurch gekennzeichnet, dass** der Messabschnitt (I) ein erster Messabschnitt (I) ist, der am Anfang der Heiz- oder Kühlphase liegt.

3.  Verfahren nach Anspruch 1 oder 2, **dadurch gekennzeichnet, dass** der Messabschnitt (I) dadurch definiert ist, dass die Steigung ($dT_S/dt$) der gemessenen Temperatur ($T_S$) positiv ist und die Änderung der Steigung ($d^2T_S/dt^2$) einen vorgegebenen ersten Grenzwert (b) überschreitet.

4.  Verfahren nach Anspruch 1, 2 oder 3, **dadurch gekennzeichnet, dass** der Faktor (K) eine erste Konstante (T) ist, deren Wert insbesondere in dem Bereich zwischen 0,1h und 3h liegt.

5.  Verfahren nach einem der vorherigen Ansprüche, **dadurch gekennzeichnet, dass** der Faktor (K) eine von der Steigung ($dT_S/dt$) der gemessenen Temperatur ($T_S$) abhängige Funktion ist.

6.  Verfahren nach Anspruch 5, **dadurch gekennzeichnet, dass** der Faktor (T) im Bereich einer kleineren Steigung ($dT_S/dt$) größer gewählt wird, als im Bereich einer größeren Steigung ($dT_S/dt$).

7.  Verfahren nach einem der vorherigen Ansprüche, **dadurch gekennzeichnet, dass** die Steigung ($dT_S/dt$) unterhalb eines vorbestimmten Steigungsgrenzwerts stärker gewichtet wird als oberhalb dieses Steigungsgrenzwerts.

8. Verfahren nach Anspruch 7, **dadurch gekennzeichnet, dass** der mit dem Faktor (K) gewichteten Steigung ($dT_S/dt$) eine Temperaturkonstante hinzuaddiert wird, wenn die Steigung über dem vorbestimmten Steigungsgrenzwert liegt.

9. Verfahren nach einem der vorherigen Ansprüche, **dadurch gekennzeichnet, dass** die operative Temperatur ($T_{OP}$) in einem zweiten Messabschnitt (II) gemäß einer zweiten Rechenvorschrift aus der Summe der gemessenen Temperatur ($T_S$) und einer zweiten Konstanten (P_I_Ende*K) berechnet wird.

10. Verfahren nach Anspruch 9, **dadurch gekennzeichnet, dass** der zweite Messabschnitt (II) dadurch definiert ist, dass die Änderung der Steigung ($d^2T_S/dt^2$) der gemessen Temperatur ($T_S$) unter den ersten Grenzwert (b) fällt und die Steigung ($dT_S/dt$) der gemessen Temperatur ($T_S$) oberhalb eines zweitens Grenzwerts (a) liegt.

11. Verfahren nach Anspruch 10, **dadurch gekennzeichnet, dass** als zweite Konstante (P_I_Ende*K) der letzte Wert, der Mittelwert oder der Maximalwert der Steigung ($dT_S/dt$) der gemessen Temperatur ($T_S$) des ersten Messabschnitts (I) verwendet wird, wobei der als zweite Konstante verwendete Wert mit einem Faktor (K) gewichtet wird.

12. Verfahren nach einem der vorherigen Ansprüche, **dadurch gekennzeichnet, dass** die zu berechnende operative Raumtemperatur ($T_{OP}$) in einem dritten Messabschnitt (III) gleich der gemessenen Temperatur ($T_S$) gesetzt wird.

13. Verfahren nach Anspruch 12, **dadurch gekennzeichnet, dass** der dritte Messabschnitt (III) dadurch definiert ist, dass die Steigung ($dT_S/dt$) der gemessenen Temperatur ($T_S$) negativ ist, oder die Steigung ($dT_S/dt$) zwischen Null und dem zweiten Grenzwert (a) und die Änderung der Steigung ($d^2T_S/dt^2$) der gemessenen Temperatur ($T_S$) unterhalb des ersten Grenzwerts (b) liegt.

14. Verfahren nach einem der vorherigen Ansprüche, **dadurch gekennzeichnet, dass** der aktuelle Wert der berechneten operativen Temperatur ($T_{OP}$) korrigiert wird, wenn sich die berechnete Raumtemperatur ($T_{OP}$) schneller als eine vorgegebene Maximaländerung pro Messintervall ändert, wobei von dem zuletzt berechneten Wert der operativen Temperatur ($T_{OP\_alt}$) im Falle einer Aufheizphase ein maximaler Temperaturänderungswert abgezogen und im Falle einer Kühlphase hinzuaddiert wird.

15. Verfahren nach einem der Ansprüche 1 bis 13, **dadurch gekennzeichnet, dass** der aktuelle Wert der berechneten operativen Temperatur ($T_{OP}$) korrigiert wird, wenn die Steigung ($dT_{OP}/dt$) der berechneten Raumtemperatur ($T_{OP}$) im Falle einer Aufheizphase negativ oder im Falle einer Kühlphase positiv ist, wobei von dem zuletzt berechneten Wert der operativen Temperatur ($T_{OP\_alt}$) im Falle einer Aufheizphase der Betrag des mit dem Abtastintervall multiplizierten, aktuellen Steigungswerts ($|dT_S/dt|*dt$) der gemessenen Temperatur ($T_S$) abgezogen und im Falle einer Kühlphase hinzuaddiert wird.

16. Verfahren nach einem der vorhergehenden Ansprüche 14 oder 15, **dadurch gekennzeichnet, dass** eine Korrektur der berechneten Raumtemperatur ($T_{OP}$) nur dann vorgenommen wird, wenn der berechnete Raumtemperaturwert ($T_{OP}$) im Falle einer Aufheizphase größer oder im Falle einer Kühlphase kleiner als der gemessene Temperaturwert ($T_S$) ist.

17. Verfahren nach einem der vorherigen Ansprüche 9 bis 16, **dadurch gekennzeichnet, dass** der zweite Messabschnitt (II) unmittelbar dem ersten Messabschnitt (I) folgt und der dritte Messabschnitt (III) unmittelbar dem zweiten Messabschnitt (II) folgt.

18. Verfahren nach einem der vorherigen Ansprüche, **dadurch gekennzeichnet, dass** die zu messende Temperatur ($T_S$) mittels eines Temperaturfühlers im Bereich einer Wand des Raumes gemessen wird.

19. Verfahren nach Anspruch 18, **dadurch gekennzeichnet, dass** der Temperaturfühler Teil eines wandhängenden Raumbediengerätes einer Raumtemperaturregelung ist.

20. Verfahren nach einem der vorherigen Ansprüche, **dadurch gekennzeichnet, dass** die berechnete Raumtemperatur ($T_{OP}$) als Istwert für eine Raumtemperaturregelung des Raumes verwendet wird.

**Temperaturverlauf eines Aufheizvorgangs**

Fig. 1

**Verlauf der 1. und 2. Ableitung des Temperaturverlaufs (von Kurve 2)**

Fig. 2